(19) Europäisches Patentamt
European Patent Office
Office européen des brevets

(11) **EP 4 609 958 A1**

(12) **EUROPEAN PATENT APPLICATION**
published in accordance with Art. 153(4) EPC

(43) Date of publication:
**03.09.2025 Bulletin 2025/36**

(21) Application number: **23882355.3**

(22) Date of filing: **02.10.2023**

(51) International Patent Classification (IPC):
**B05B 17/00** (2006.01)     **B01F 23/2373** (2022.01)
**B01F 25/00** (2022.01)     **B05B 1/34** (2006.01)

(52) Cooperative Patent Classification (CPC):
**B01F 23/2373; B01F 25/00; B05B 1/34;
B05B 17/00**

(86) International application number:
**PCT/JP2023/035935**

(87) International publication number:
**WO 2024/090146 (02.05.2024 Gazette 2024/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.10.2022 JP 2022169729**

(71) Applicant: **AQUASOLUTION Corporation
Tomi-shi
Nagano 389-0514 (JP)**

(72) Inventors:
• **SHINAGAWA, Masashi
  Tomi-shi, Nagano 389-0514 (JP)**
• **TSUCHIYA, Yukihiro
  Tomi-shi, Nagano 389-0514 (JP)**
• **SATO, Takashi
  Tokyo 102-0084 (JP)**

(74) Representative: **Piotrowicz, Pawel Jan Andrzej et al
Venner Shipley LLP
406 Cambridge Science Park
Milton Road
Cambridge CB4 0WW (GB)**

(54) **LIQUID SPRAYER**

(57)     There is provided a liquid ejection apparatus capable of ejecting nanobubble-containing liquid with a simple configuration.

A liquid ejection apparatus includes: one or more ejection ports ejecting liquid; a discharge device discharging liquid; a first channel through which liquid discharged from the discharge device flows toward the one or more ejection ports; and a microbubble generator disposed at an intermediate position of the first channel. A small diameter portion is provided in a tubular portion of the microbubble generator, and an inner diameter of the small diameter portion is smaller than that of a portion situated on an upstream side of the small diameter portion. The microbubble generator generates microbubbles in liquid flowing through the tubular portion by use of cavitation occurring when the liquid passes through the small diameter portion from an upstream side of the small diameter portion. A cross-sectional area of the small diameter portion is equal to or greater than a sum of opening areas of the one or more ejection ports.

FIG. 2

## Description

TECHNICAL FIELD

The present invention relates to a liquid ejection apparatus, particularly to a liquid ejection apparatus capable of ejecting nanobubble-containing liquid.

BACKGROUND ART

Liquid ejection apparatuses ejecting liquids from ejection ports have been used in various fields. Ejected liquids are used for specified purposes, and to efficiently achieve such purposes, useful functions or effects are often imparted to the liquids. One example thereof is incorporation of ultrafine bubbles such as nanobubbles into liquid (for example, see Patent Literature 1).

An apparatus described in Patent Literature 1 includes a gas injection part that injects gas into liquid, a pressurizing part that generates a gas-liquid mixture in a pressurized state by pressurizing the liquid into which the gas has been injected, and a decompression part that decompresses the gas-liquid mixture to the atmospheric pressure while conveying the gas-liquid mixture. When the gas-liquid mixture is conveyed to the decompression part, nanosized air bubbles are generated in the liquid.

With the apparatus described in Patent Literature 1 configured as above, nanobubble-containing liquid can be ejected. For instance, application of the nanobubble-containing liquid to plants leads to good growth of the plants. Specifically, when nanobubbles are generated in a chemical solution such as an agrochemical and the nanobubble-containing chemical solution is sprayed to plants, disease and insect damage of plants can be suppressed well (see Patent Literature 2).

CITATION LIST

PATENT LITERATURE

    Patent Literature 1: JP 2011-152513 A
    Patent Literature 2: JP 2015-097509 A

SUMMARY OF INVENTION

TECHNICAL PROBLEMS

It is desirable for an apparatus ejecting nanobubble-containing liquid to have a relatively simple configuration in view of ease of installation and maintenance of the apparatus and other factors. Meanwhile, conventional apparatuses require a mechanism of compressing gas and incorporating the gas into liquid as in the apparatus described in Patent Literature 1; due to the provision of the mechanism, a larger installation space for the apparatus needs to be ensured, and the number of devices constituting the apparatus increases.

Aside from that, when an existing liquid ejection apparatus is modified to an apparatus capable of ejecting nanobubble-containing liquid, it is favorable that it can be modified with a simpler configuration.

The present invention has been made in view of the above circumstances and is aimed at solving objects described below. Specifically, an object of the present invention is to provide a liquid ejection apparatus capable of ejecting nanobubble-containing liquid with a simpler configuration.

Another object of the present invention is to modify an existing liquid ejection apparatus to an apparatus capable of ejecting nanobubble-containing liquid with a simpler configuration.

SOLUTION TO PROBLEMS

In order to attain the foregoing objects, a liquid ejection apparatus according to the present invention comprises: one or more ejection ports ejecting liquid; a discharge device discharging liquid; a first channel through which liquid discharged from the discharge device flows toward the one or more ejection ports; and a microbubble generator disposed at an intermediate position of the first channel, wherein a small diameter portion is provided in a tubular portion of the microbubble generator, and an inner diameter of the small diameter portion is smaller than that of a portion situated on an upstream side of the small diameter portion, the microbubble generator generates microbubbles in liquid flowing through the tubular portion by use of cavitation occurring when the liquid passes through the small diameter portion from an upstream side of the small diameter portion, and a cross-sectional area of the small diameter portion is equal to or greater than a sum of opening areas of the one or more ejection ports.

With the liquid ejection apparatus configured as above, when liquid containing microbubbles generated in the microbubble generator passes the ejection ports, the microbubbles change to nanobubbles. Thus, nanobubble-containing liquid can be ejected from the ejection ports with a relatively simple configuration. Further, by incorporating the microbubble generator to an existing liquid ejection apparatus, the existing liquid ejection apparatus can be modified to an apparatus capable of ejecting nanobubble-containing liquid by simple modification.

The liquid ejection apparatus according to the present invention may also have a storage storing liquid. In this case, the discharge device may take in liquid stored in the storage and discharge the liquid. The liquid ejection apparatus according to the present invention may further comprise a second channel connected to the first channel at a position on a downstream side of the microbubble generator in the first channel, and a downstream end of the second channel may be connected to the storage.

With the above configuration, microbubble-containing liquid circulates via the storage, the discharge device, and the microbubble generator. This can sufficiently increase the number of microbubbles contained in liquid flowing through the first channel. Further, when a solid substance such as a fertilizer or a medical agent is dissolved in liquid, circulating the liquid promotes dissolution of the solid substance in the liquid, thus allowing the solid substance to be dispersed in the liquid well.

The small diameter portion may include a first small diameter portion and a second small diameter portion situated on a downstream side of the first small diameter portion. The tubular portion may be provided in its interior with an increased diameter portion, a uniform diameter portion, and a turbulence generation portion between the first small diameter portion and the second small diameter portion. The increased diameter portion may be situated on a downstream side of the first small diameter portion and may have an inner diameter increasing toward a downstream side. The uniform diameter portion may be situated on a downstream side of the increased diameter portion to be adjacent to the increased diameter portion and may extend toward a downstream side with its inner diameter being same as an inner diameter of a downstream end of the increased diameter portion. The turbulence generation portion may be disposed between the uniform diameter portion and the second small diameter portion to be adjacent to each of the uniform diameter portion and the second small diameter portion and may extend toward a downstream side with its inner diameter being same as the inner diameter of the uniform diameter portion.

The above configuration makes it possible to efficiently generate microbubbles in the microbubble generator and make the generated microbubbles finer.

Further, in an axial direction of the tubular portion, a step surface intersecting the axial direction may be provided between an inner wall surface of the turbulence generation portion and an inner wall surface of the second small diameter portion.

Owing to the above configuration, a turbulence is generated in a flow of liquid in the turbulence generation portion, thereby making microbubbles in the liquid finer.

The turbulence generation portion may be provided in its interior with a tubular protrusion portion protruding from, of the step surface, a portion surrounding an upstream end of the second small diameter portion toward an upstream side along the axial direction. Further, a recess portion may be provided between the inner wall surface of the turbulence generation portion and an outer peripheral surface of the tubular protrusion portion.

The above configuration facilitates generation of a turbulence in a flow of liquid in the turbulence generation portion. As a result, microbubbles in liquid can be still more efficiently made finer in the turbulence generation portion.

Preferably, a discharge pressure when the discharge device discharges liquid is set such that a pressure of liquid when the liquid passes an upstream end of the microbubble generator in the first channel is not less than 0.15 MPa.

This configuration allows liquid to flow through the tubular portion of the microbubble generator with the pressure required for the liquid to pass through the inside of the tubular portion to generate microbubbles.

The microbubble generator may be constituted of a nozzle from whose tip microbubble-containing liquid flows out.

With this configuration, by incorporating the nozzle that is the microbubble generator into the first channel, nanobubble-containing liquid can be ejected from the ejection ports with a simple configuration. Further, this configuration facilitates incorporation of the microbubble generator into an existing liquid ejection apparatus.

A part of the first channel may be constituted of a hose, and a part of the hose may be joined to an end of the tubular portion of the microbubble generator.

This configuration further facilitates incorporation of the microbubble generator into an existing liquid ejection apparatus.

ADVANTAGEOUS EFFECTS OF INVENTION

The present invention makes it possible to obtain a liquid ejection apparatus capable of ejecting nanobubble-containing liquid with a simpler configuration.

The present invention also makes it possible to modify an existing liquid ejection apparatus to an apparatus capable of ejecting nanobubble-containing liquid with a simpler configuration.

BRIEF DESCRIPTION OF DRAWINGS

[FIG. 1] FIG. 1 is a schematic view of a vehicle with a liquid ejection apparatus.
[FIG. 2] FIG. 2 is a conceptual view of the liquid ejection apparatus according to one embodiment of the invention.
[FIG. 3] FIG. 3 is an appearance view of a nozzle constituting a microbubble generator.
[FIG. 4] FIG. 4 is a cross-sectional view of the nozzle constituting the microbubble generator.
[FIG. 5] FIG. 5 is an enlarged view of a turbulence generation portion in the microbubble generator.
[FIG. 6] FIG. 6 is a view showing ejection ports and a small diameter portion of the microbubble generator.
[FIG. 7] FIG. 7 is a cross-sectional view of an ejector constituting a microbubble generator according to a modification.

DESCRIPTION OF EMBODIMENTS

A liquid ejection apparatus of the present invention is described by reference to a preferred embodiment (hereinafter called the embodiment) illustrated in the appended drawings.

Note that the embodiment is merely one specific embodiment used to describe the invention in a comprehensible manner, and the invention is by no means limited to the embodiment. In other words, the invention may be modified or improved without departing from the scope and spirit of the invention. Needless to say, the invention includes its equivalents.

The materials, dimensions, shapes and other factors of devices and components of the liquid ejection apparatus according to the invention can be arbitrarily specified depending on the application of the invention, the state of the art at the time when the invention is implemented, and other conditions.

In this description, the term "apparatus" comprises an apparatus that may be treated as a unit with its constituent components being stored in a casing. Aside from that, the term may comprise one that is present as an "apparatus" with its constituent devices being disposed separately and independently from one another but cooperating together to achieve a specific objective. In addition, the term "apparatus" is not limited to the foregoing concept.

In the description, a numerical range specified using "to" refers to a range including the numerical values stated before and after "to" as the lower limit value and the upper limit value.

<<Summary of Liquid Ejection Apparatus>>

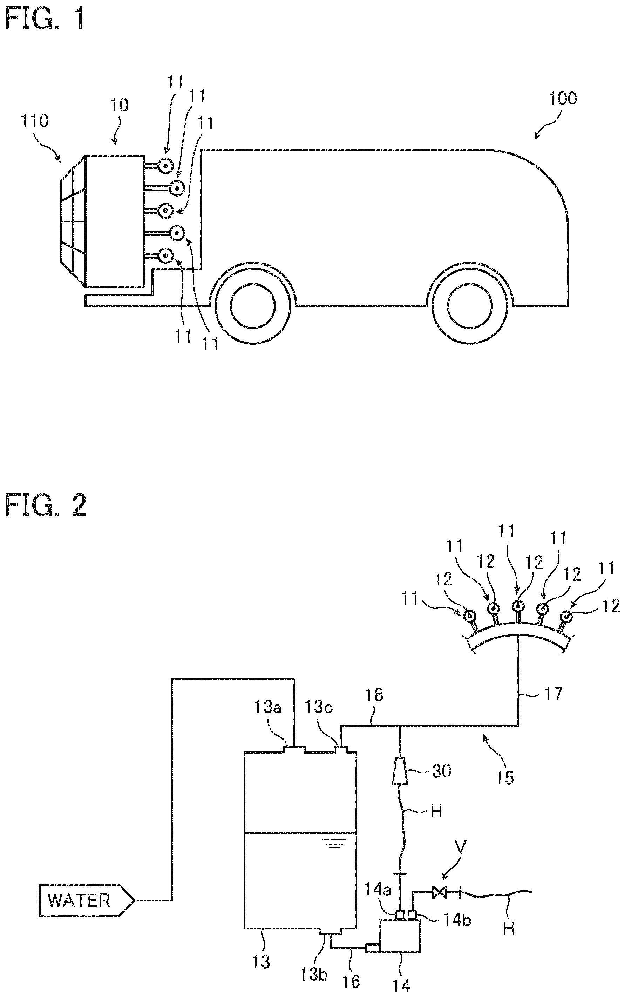

The general outline of a liquid ejection apparatus according to the embodiment (hereinafter referred to as the liquid ejection apparatus 10) is described by reference to FIG. 1. The liquid ejection apparatus 10 is an apparatus that ejects nanobubble-containing liquid, and in this embodiment, generates nanobubbles in a chemical solution and ejects the nanobubbule-containing chemical solution. The nanobubbule-containing chemical solution is used for the purposes of, for instance, agriculture or plant cultivation (including horticulture and home vegetable gardening).

Nanobubbles are ultrafine bubbles with a diameter of less than 1 $\mu$m, and the state where nanobubbles are contained in liquid may be maintained for a long time (about several months). Nanobubbles are different from microbubbles representing bubbles with a diameter of 1 $\mu$m to 100 $\mu$m.

The chemical solution is one example of liquid and is an aqueous solution generated by dissolving a solid fertilizer, medical agent, or the like in water or diluting a liquid fertilizer, medical agent, or the like with water. Water is one example of liquid and is general water (e.g., tap water, well water, river water, or the like) used for the purpose of agriculture or plant cultivation, for example. However, water is not limited thereto and may be distilled water, pure water, ultrapure water, or turbid water having a mineral, an organic substance, or the like mixed therein. A solute dissolved in water is not limited to a solid substance and may be a liquid (e.g., a liquid medical agent or fertilizer) other than water.

It is known that, when a chemical solution is prepared by adding a solid or liquid fertilizer to water, incorporation of nanobubbles into the chemical solution leads to the effect of accelerating the growth of plants compared to typical chemical solutions. It is also known that, when a chemical solution is prepared by adding a solid or liquid medical agent (agrochemical) to water, incorporation of nanobubbles into the chemical solution improves its spreading and adhesion effect, so that damage of plants caused by diseases or pests can be effectively controlled.

In the present embodiment, the liquid ejection apparatus 10 includes two or more ejection heads 11 as shown in FIG. 1 and ejects a nanobubble-containing chemical solution from ejection ports 12 separately provided at the ejection heads 11. More specifically, the ejection port 12 of each ejection head 11 is relatively small in size (i.e., has a small diameter), and the nanobubble-containing chemical solution is ejected in the form of mist, in other words, sprayed from the ejection ports 12.

In the present embodiment, the liquid ejection apparatus 10 is mounted on a self-propelled vehicle (mobile object) as shown in FIG. 1. A vehicle 100 with a liquid ejection apparatus is a so-called speed sprayer and travels while ejecting the nanobubble-containing chemical solution in an agricultural field where plants are cultivated. At this time, the nanobubble-containing chemical solution is sprayed in the form of mist as described above, and the sprayed mist of the nanobubble-containing chemical solution is spread around by wind sent by a blower device 110 equipped on the vehicle 100 with a liquid ejection apparatus.

It should be noted that the vehicle (mobile object) on which the liquid ejection apparatus 10 is mounted is not limited to a speed sprayer and may be, for instance, a so-called boom sprayer.

A drive device, specifically, a drive motor of a pump 14 to be described later, or the like of the liquid ejection apparatus 10 is operated upon receiving drive force from an engine that the vehicle 100 with a liquid ejection apparatus has. Upon operation of devices in the apparatus, the liquid ejection apparatus 10 ejects (sprays) the nanobubble-containing chemical solution from the ejection ports 12 of the plural ejection heads 11.

<<Exemplary Configuration of Liquid Ejection Apparatus of the Invention>>

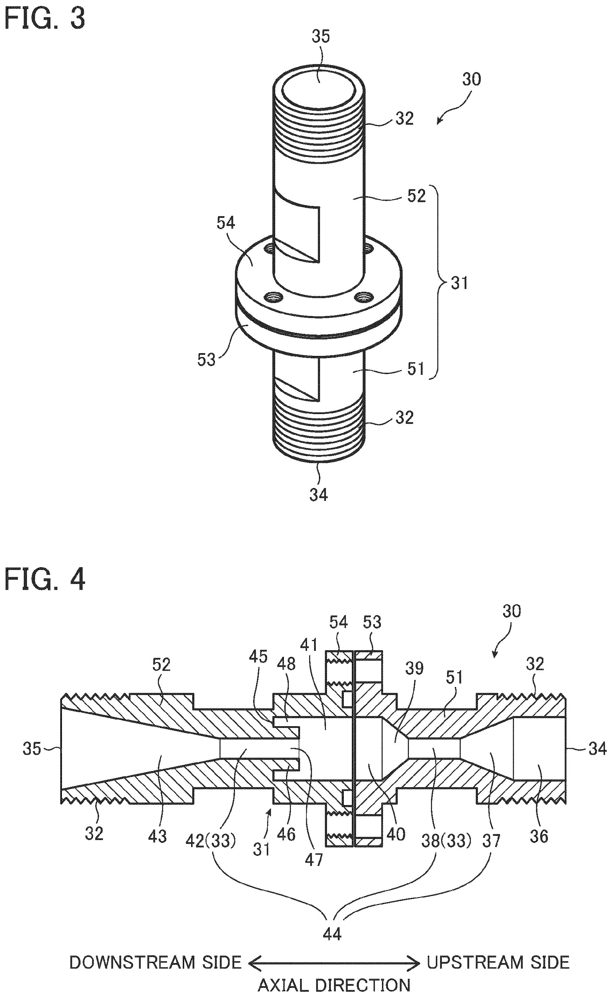

Next, an exemplary configuration of the liquid ejection apparatus 10 is described by reference to FIGS. 2 and 3. In the following description, the terms "upstream (side)" and "downstream (side)" are concepts used to indicate a position defined in a chemical solution flowing direction (more precisely, a position viewed from a reference position or device). Specifically, the side toward which the chemical solution flows (in other words, the side closer to the ejection ports 12) in the chemical solution flowing direction is the "downstream side," and the opposite side thereof is the "upstream side."

The liquid ejection apparatus 10 includes the ejection heads 11, a liquid tank 13, the pump 14, and a microbubble generator 30 as shown in FIG. 2. Those devices are interconnected by a channel 15, and the chemical solution flows through the channel 15. The configuration of the liquid ejection apparatus 10 is the same as apparatuses mounted on conventional speed sprayers except that the microbubble generator 30 is provided. In other words, the liquid ejection apparatus 10 according to the present embodiment can be formed by introducing (adding) the microbubble generator 30 according to the present embodiment to an existing speed sprayer.

The ejection heads 11 are disposed on the most downstream side in the liquid ejection apparatus 10 and each include the ejection port 12 for ejecting liquid. Thus, the ejection head 11 has a similar configuration to that of, for example, an ejection nozzle of a known speed sprayer. In the present embodiment, the plural ejection heads 11 are arranged regularly or irregularly, and are for example arranged to form an arc-shaped row in order to eject liquid (chemical solution) in a radial manner.

The chemical solution flowing through the channel 15 enters the ejection heads 11 and then passes the ejection ports 12 to be ejected outside the ejection heads 11, i.e., into the atmosphere. Since the bore diameter of the ejection port 12 is relatively small as described above, the liquid solution is sprayed in the form of mist from the ejection port 12 The shape of an opening of the ejection port 12 is for example a circle but is not limited thereto and may be a polygon such as a quadrangle or a triangle, an ellipse, or an undefined shape. The number of the ejection heads 11 provided in the liquid ejection apparatus 10 is not particularly limited but is preferably a suitable number corresponding to, for instance, the area of the field where the chemical solution ejected from the ejection heads 11 is used.

The liquid tank 13 is a storage storing the chemical solution therein and is constituted of, for example, a container of closed or semi-closed type. The liquid tank 13 is provided with a supply port 13a for water, and new water is poured into the tank through the supply port 13a. The liquid tank 13 is also provided with a discharge port 13b for the chemical solution, and the chemical solution discharged from the tank through the discharge port 13b is drawn into the pump 14. The liquid tank 13 is also provided with a return port 13c for the chemical solution as shown in FIG. 2. The chemical solution flowing through a second channel 18 to be described later enters the tank through the return port 13c and collected.

A solid substance such as a fertilizer or a medical agent may be put in the liquid tank 13 from the supply port 13a and dissolved in water in the tank. In other words, water having the solid substance dissolved therein, i.e., the chemical solution may be prepared in the liquid tank 13. In this case, a stirring device or the like may be installed in the liquid tank 13 for the purpose of efficiently dissolving the solid substance in the tank.

The pump 14 is a discharge device that takes in the chemical solution of the liquid tank 13 through the discharge port 13b and discharges the taken chemical solution, and is constituted of, for instance, a plunger pump. The type and style of the pump 14 are not particularly limited, and the pump 14 may be a positive displacement pump or a non-positive displacement pump such as a centrifugal type.

The pump 14 pressurizes the taken chemical solution and discharges the pressurized chemical solution from a discharge port 14a. The chemical solution discharged from the pump 14 has gas, specifically air incorporated therein, and the chemical solution immediately after passing the discharge port 14a contains air dissolved therein (dissolved air) in an amount corresponding to the discharge pressure at that place. In the present embodiment, the discharge pressure of the pump 14 is set such that the inflow pressure to the microbubble generator 30 is not less than 0.15 MPa in view of a pressure loss in the channel 15. In other words, the performance (ability) of the pump 14 is selected such that the inflow pressure is not less than 0.15 MPa when the chemical solution is discharged at a predetermined flow rate. The inflow pressure to the microbubble generator 30 is a pressure of liquid (chemical solution) when the liquid passes the upstream end of the microbubble generator 30 in a first channel 17 to be described later.

The upper limit of the inflow pressure is not particularly limited; since the number of microbubbles generated in the microbubble generator 30 increases with increasing inflow pressure, it is preferable to specify the inflow pressure to be the highest possible value. On the other hand, in view of pressure resistance performance and durability performance of members constituting the channel 15 and devices provided in the channel 15, it is preferable to specify the inflow pressure within the range that does not go beyond those performances, for example within the range of 0.15 MPa to 5.0 MPa. When the inflow pressure is within the above range, a cavitation effect can be further enhanced in the microbubble generator 30, and this allows the dissolved air in the chemical solution to easily appear as microbubbles.

The pump 14 according to the present embodiment includes a second discharge port 14b, an on-off valve V is installed on an immediately downstream side of the second discharge port 14b, and a hose H is joined to the downstream end of the on-off valve V, as shown in FIG. 2. With this configuration, when the pump 14 is operated with the on-off valve V being in the open state, the chemical solution discharged from the pump 14 is transferred through the hose H, and the chemical solution discharged from the end of the hose can be used.

The channel 15 is a channel through which the chemical solution flows, and is constituted of pipes, hoses, and devices such as the microbubble generator 30, that form a part of the channel. Each portion of the channel 15 connects two devices arranged in sequence in the chemical solution flowing direction; in other words, one end of a portion of the channel 15 between two devices is connected to a device situated on the upstream side, while the other end thereof is connected to a device situated on the downstream side. The expression "connected" herein includes connection by means of a joint, welding, or other means, and may also include connection via a valve or the like.

Although not particularly illustrated in FIG. 2, the channel 15 may be optionally provided with an on-off valve, a flow rate regulating valve, gauges such as a pressure gauge and a flowmeter, a strainer, a sight glass used to monitor the status of flow, and other components.

As shown in FIG. 2, a part of the channel 15 may be constituted of the hose H having flexibility. In this case, an end of the hose H may be joined to a joint portion of at least one of two devices arranged in sequence in the chemical solution flowing direction. An end of the hose H may be fixed to the joint portion with an annular or tubular hose fastener disposed to face the outer periphery of the end of the hose H. The end of the hose H may be fixed to the joint portion more tightly by crimping a hose fastener onto the hose. The hose H may be one of a rubber hose, a resin hose, a flexible hose made of metal, a braided hose, and another hose that can be used for an agricultural or horticultural purpose.

In the present embodiment, the channel 15 includes an intake channel 16 connecting the liquid tank 13 and the pump 14, and the first channel 17 extending from the discharge port 14a of the pump 14, as shown in FIG. 2. The chemical solution discharged from the liquid tank 13 flows toward the pump 14 through the intake channel 16. The first channel 17 has the microbubble generator 30 at its intermediate position and extends up to the ejection ports 12 of the ejection heads 11. A part of the first channel 17 may be constituted of the flexible hose H as shown in FIG. 2.

The channel 15 also includes the second channel 18 used to return the chemical solution discharged from the pump 14 as shown in FIG. 2. The second channel 18 is connected to the first channel 17 at a position on the downstream side of the microbubble generator 30 in the first channel 17. In other words, the second channel 18 is a channel branching off the first channel 17 at a branch point on the downstream side of the microbubble generator 30. One end of the second channel 18, more specifically, an end thereof opposite from the end connected to the first channel 17 is connected to the return port 13c of the liquid tank 13. A part of the chemical solution having been discharged from the pump 14 and passed the microbubble generator 30 (precisely, microbubble-containing chemical solution) flows through the second channel 18. The chemical solution flowing through the second channel 18 is returned to the liquid tank 13. In other words, in the liquid ejection apparatus 10 according to the present embodiment, there is provided a circulation type channel in which the microbubble-containing chemical solution is circulated via the liquid tank 13, the pump 14, and the microbubble generator 30.

The microbubble generator 30 is disposed at an intermediate position of the first channel 17 as described above, and the chemical solution flowing through the first channel 17 passes the inside of the microbubble generator 30. In other words, an inner space of the microbubble generator 30 (specifically, an inner space of a tubular portion 31) constitutes a part of the first channel 17. The microbubble generator 30 generates microbubbles in the chemical solution passing the inside thereof. With regard to the principle of generation of microbubbles in the present embodiment, when cavitation is forcibly created in the microbubble generator 30, the pressure of the chemical solution reduces, and negative pressure is generated. Consequently, dissolved air in the chemical solution appears as microbubbles. Hence, the microbubble-containing chemical solution flows out from the downstream end (tip) of the microbubble generator 30.

The chemical solution having flowed out from the microbubble generator 30, i.e., the microbubble-containing chemical solution flows through the first channel 17 and, upon reaching the ejection ports 12 of the ejection heads 11, is ejected from the ejection ports 12. At this time, microbubbles incorporated in the chemical solution are made still finer, and most of the microbubbles change to nanobubbles. As a result, a nanobubble-containing chemical solution is ejected (more precisely, sprayed) from the ejection ports 12.

Meanwhile, the microbubble generator 30 according to the present embodiment is constituted of a nozzle shown in FIG. 3. This nozzle can be easily installed to a channel that an existing speed sprayer already has, specifically, to the first channel 17 extending from the discharge port 14a of the pump 14 to the ejection ports 12 of the ejection heads 11.

More specifically, a screw thread 32 (specifically, male thread) is formed at each of the opposite end portions of the tubular portion 31 of the nozzle as shown in FIG. 3. A screw thread (specifically, female thread) provided at a hose nipple (not shown) is fitted to the screw thread 32, and the hose nipple is coupled to the end of the nozzle by the fitting of those screw threads. Then, the hose H constituting a part of the first channel 17 is fitted to a step-shaped coupling portion provided at an end of the hose nipple, whereby the nozzle as the microbubble generator 30 can be disposed at an intermediate position of the first channel 17.

As described above, when a part of the first channel 17 is constituted of the hose H, a part of the hose H can be joined to an end of the tubular portion 31 of the microbubble generator 30 via the hose nipple. Owing to this configuration, the microbubble generator 30 can be retrofitted to an existing apparatus (speed sprayer). In other words, an existing speed sprayer can be modified to an apparatus capable of ejecting the nanobubble-containing chemical solution with a relatively simple configuration.

The means and method of installing the nozzle to the first channel 17 are not particularly limited; for instance, an existing pipe may be cut, and an end of the nozzle may be welded to the cut pipe. Alternatively, when a part of an existing pipe is bolted at its flange, the part of the pipe may be removed to allow the nozzle having a flange at its end to be disposed in the vacated space and bolted at the flange.

<<Configuration of Microbubble Generator>>

The configuration of the microbubble generator 30 according to the present embodiment is described with reference to FIGS. 3 to 5.

The microbubble generator 30 is a nozzle-type device and includes the tubular portion 31 as shown in FIG. 3. The tubular portion 31 has, in its interior, a small diameter portion 33 smaller in inner diameter than a portion situated on the upstream side thereof as shown in FIG. 4. Specifically, the inner diameter of the small diameter portion 33 is smaller than that of a portion situated on the upstream side of the small diameter portion 33 (more precisely, a portion adjacent to the small diameter portion 33 on the upstream side of the small diameter portion 33). The small diameter portion 33 comprises a first small diameter portion 38 and a second small diameter portion 42 situated on the downstream side of the first small diameter portion 38.

The tubular portion 31 includes an inflow port 34 as an open end on the upstream side and an outflow port 35 as an open end on the downstream side as shown in FIG. 4. The tubular portion 31 is provided in its interior with a large diameter portion 36, a reduced diameter portion 37, the first small diameter portion 38, an increased diameter portion 39, a uniform diameter portion 40, a turbulence generation portion 41, the second small diameter portion 42, and an ejection portion 43 that are coaxially arranged in sequence from the inflow port 34 to the outflow port 35 as shown in FIG. 4. In other words, the increased diameter portion 39, the uniform diameter portion 40, and the turbulence generation portion 41 are provided between the first small diameter portion 38 and the second small diameter portion 42 in the tubular portion 31.

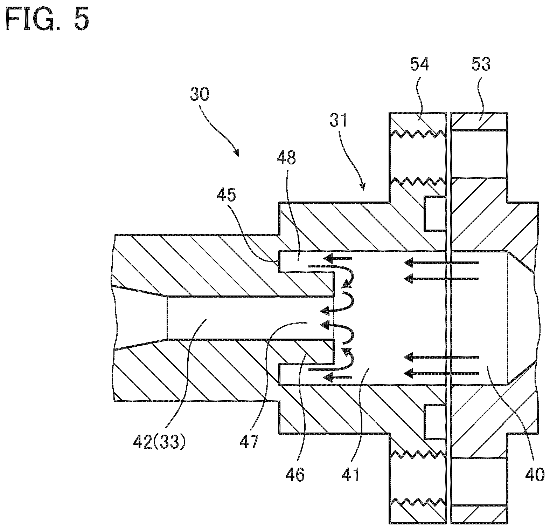

The reduced diameter portion 37, the first small diameter portion 38, and the second small diameter portion 42 constitute a load generation portion 44. In the load generation portion 44, the flow rate of the chemical solution increases so that negative pressure is generated in the liquid, and this causes cavitation. Consequently, dissolved air in the liquid appears as microbubbles. In the turbulence generation portion 41, turbulence occurs in the flow of the chemical solution and the chemical solution is pressurized as shown in FIG. 5, whereby microbubbles generated on the upstream side in the turbulence generation portion 41 are made finer, so that finer microbubbles are generated.

In the present embodiment, the tubular portion 31 is preferably constituted of separate two tubular members (hereinafter called a first member 51 and a second member 52) joined together for the sake of manufacturability. In this case, the first member 51 includes a flange portion 53 on the outer peripheral edge of its downstream end, and the second member 52 includes a flange portion 54 on the outer peripheral edge of its upstream end. The first member 51 and the second member 52 may be coupled together by joining and fixing the flange portions 53 and 54 to each other by a bolt or other means. However, the tubular portion 31 is not limited to the configuration in which the first member 51 and the second member 52 are separable, and may be constituted of a single component.

An end of the first member 51 opposite to the flange portion 53 forms the inflow port 34, and as shown in FIG. 4, the large diameter portion 36, the reduced diameter portion 37, the first small diameter portion 38, the increased diameter portion 39, and the uniform diameter portion 40 are arranged in this order from the upstream side in the first member 51. An end of the second member 52 opposite to the flange portion 54 forms the outflow port 35, and as shown in FIG. 4, the turbulence generation portion 41, the second small diameter portion 42, and the ejection portion 43 are arranged in this order from the upstream side in the second member 52.

The large diameter portion 36 is a space situated on the most upstream side in the tubular portion 31 and extends toward the downstream side with its inner diameter being uniform from the upstream end through the downstream end of the large diameter portion 36. The inner diameter of the large diameter portion 36 is not particularly limited and may be about 5 mm to about 15 mm, for example.

The reduced diameter portion 37 is a space in a tapered shape that is situated on the downstream side of the large diameter portion 36 to be adjacent to the large diameter portion 36 and has an inner diameter gradually reducing toward the downstream side. The inner diameters of different portions of the reduced diameter portion 37, in other words, the degree of reduction of the diameter in the reduced diameter portion 37 is not particularly limited, and the inner diameter of the reduced diameter portion 37 may be reduced such that the inner diameter of the downstream end of the reduced diameter portion 37 is about one third of the inner diameter of the large diameter portion 36.

The first small diameter portion 38 is a space smaller in inner diameter than the large diameter portion 36 situated on the upstream side of the first small diameter portion 38. The first small diameter portion 38 is situated on the downstream side of the reduced diameter portion 37 to be adjacent to the reduced diameter portion 37 and extends toward the downstream side with its inner diameter being the same as the inner diameter of the downstream end of the reduced diameter portion 37. The inner diameter of the first small diameter portion 38 is not particularly limited as long as it satisfies Formula 1 described later, and for example, may be about one third of the inner diameter of the large diameter portion 36.

The increased diameter portion 39 is a space in a tapered shape that is situated on the downstream side of the first small diameter portion 38 to be adjacent to the first small diameter portion 38 and has an inner diameter gradually increasing toward the downstream side. The inner diameters of different portions of the increased diameter portion 39, in other words, the degree of increase of the diameter in the increased diameter portion 39 is not particularly limited, and for instance, the inner diameter of the increased diameter portion 39 may be increased such that the inner diameter of the downstream end of the increased diameter portion 39 is substantially the same as the inner diameter of the large diameter portion 36.

The uniform diameter portion 40 is a space situated on the downstream side of the increased diameter portion 39 to be adjacent to the increased diameter portion 39 and extending toward the downstream side with its inner diameter being the same as the inner diameter of the downstream end of the increased diameter portion 39. The inner diameter of the uniform diameter portion 40 is not particularly limited and may be substantially the same as the inner diameter of the large diameter portion 36, for example.

The turbulence generation portion 41 is a space having the same diameter as the uniform diameter portion 40, in other words, extends toward the downstream side with its inner diameter being the same as the inner diameter of the uniform diameter portion 40. The turbulence generation portion 41 is adjacent to the uniform diameter portion 40 on the downstream side of the uniform diameter portion 40. In other words, the turbulence generation portion 41 is disposed between the uniform diameter portion 40 and the second small diameter portion 42 and is adjacent to each of the uniform diameter portion 40 and the second small diameter portion 42.

The second small diameter portion 42 is a space smaller in inner diameter than the uniform diameter portion 40 and the turbulence generation portion 41 that are situated on the upstream side of the second small diameter portion 42. The second small diameter portion 42 is situated on the downstream side of the turbulence generation portion 41 to be adjacent to the turbulence generation portion 41 and extends toward the downstream side with its inner diameter being uniform. The inner diameter of the second small diameter portion 42 is not particularly limited as long as it satisfies Formula 1 described later, and for example, may be about one third of the inner diameter of the large diameter portion 36. The inner diameters of the second small diameter portion 42 and the first small diameter portion 38 may be the same. In this case, the inner diameter of the small diameter portion 33 corresponds to the inner diameter of each of the first small diameter portion 38 and the second small diameter portion 42. Alternatively, one of the first small diameter portion 38 and the second small diameter portion 42 may have a smaller inner diameter than the inner diameter of the other. In this case, the inner diameter of the small diameter portion 33 corresponds to a smaller one of the inner diameters of the first small diameter portion 38 and the second small diameter portion 42.

The ejection portion 43 is a space in a tapered shape that is situated on the most downstream side in the tubular portion 31, is situated on the downstream side of the second small diameter portion 42 to be adjacent to the second small diameter portion 42, and has an inner diameter gradually increasing toward the downstream side. The inner diameters of different portions of the ejection portion 43, in other words, the degree of increase of the diameter in the ejection portion 43 is not particularly limited, and for instance, the inner diameter of the ejection portion 43 may be increased such that the inner diameter of the downstream end of the ejection portion 43 is about three to four times as large as the inner diameter of the second small diameter portion 42.

The configuration of the turbulence generation portion 41 is described in further detail with reference to FIG. 5. The inner diameter of the turbulence generation portion 41 is far larger than that of the second small diameter portion 42. In other words, the inner diameter of the tubular portion 31 discontinuously changes at the boundary position between the turbulence generation portion 41 and the second small diameter portion 42. In other words, a step surface 45 intersecting (specifically, substantially perpendicular to) an axial direction of the tubular portion 31 is provided between an inner wall surface of the turbulence generation portion 41 and an inner wall surface of the second small diameter portion 42 in the axial direction.

The turbulence generation portion 41 is also provided in its interior with a tubular protrusion portion 46. The tubular protrusion portion 46 protrudes from, of the step surface 45, a portion surrounding the upstream end of the second small diameter portion 42 toward the upstream side along the axial direction, as shown in FIG. 5. A cylindrical space surrounded by the tubular protrusion portion 46 forms a communication portion 47 that communicates with the second small diameter portion 42. The length, that is, the protruding amount of the tubular protrusion portion 46 in the axial direction is not particularly limited and may be about 3 mm to about 5 mm, for example.

An annular recess portion 48 is provided between the inner wall surface of the turbulence generation portion 41 and an outer peripheral surface of the tubular protrusion portion 46 in the turbulence generation portion 41. The chemical solution flowing toward the downstream side in the turbulence generation portion 41 enters the recess portion 48, hits the step surface 45, and bounces off toward the upstream side. Due to this configuration, a turbulence occurs around the tubular protrusion portion 46 as shown in FIG. 5. The chemical solution flowing in a turbulence state around the tubular protrusion portion 46 flows into the communication portion 47 situated inside the tubular protrusion portion 46.

When the chemical solution flows in the tubular portion 31 of the microbubble generator 30 configured as above, microbubbles are generated in the chemical solution, so that microbubble-containing chemical solution flows out from the outflow port 35 of the tubular portion 31. More specifically, the chemical solution having entered the tubular portion 31 from the inflow port 34 flows from the upstream side to the downstream side along the axial direction in the large diameter portion 36. Thereafter, the chemical solution flows in the reduced diameter portion 37 and the first small diameter portion 38, i.e., the load generation portion 44. In this process, since the flow rate of the chemical solution increases, the pressure of the chemical solution is reduced, so that negative pressure is generated, and this causes cavitation; consequently, dissolved air in the chemical solution appears as microbubbles.

The chemical solution further flows toward the downstream side in the increased diameter portion 39 and the uniform diameter portion 40. In this process, a flow of the chemical solution (liquid flow) is generated along the inner wall surfaces of the increased diameter portion 39 and the uniform diameter portion 40. The chemical solution subsequently flows to the turbulence generation portion 41, enters the recess portion 48, hits the step surface 45, and bounces off toward the upstream side (see FIG. 5). As a result, a turbulence occurs around the tubular protrusion portion 46, and the chemical solution is pressurized, which makes microbubbles finer in the chemical solution. The chemical solution in a turbulence state subsequently flows into the communication portion 47 situated inside the tubular protrusion portion 46 and further flows toward the downstream side in the second small diameter portion 42 that is a constituent of the load generation portion 44. In this process, since the flow rate of the chemical solution again increases, the pressure of the chemical solution is reduced, so that negative pressure is generated in the liquid flow, and this causes cavitation. Consequently, dissolved air in the chemical solution flowing in the second small diameter portion 42 appears as microbubbles, and this allows the chemical solution to contain a sufficient amount of microbubbles. Then, the microbubble-containing chemical solution flows in the ejection portion 43 and flows out (more precisely, is ejected) from the tip of the nozzle that is the microbubble generator 30, i.e., the outflow port 35.

With this configuration, when the chemical solution passes through the small diameter portion 33 (specifically, the first small diameter portion 38 and the second small diameter portion 42) from the upstream side of the small diameter portion 33 in the microbubble generator 30, the flow rate of the chemical solution increases, so that negative pressure is generated in the liquid flow, and this causes cavitation. Owing to this cavitation, dissolved air in the chemical solution appears as microbubbles, and thus, microbubbles are generated in the chemical solution. Furthermore, the microbubbles can be finer by generating a turbulence in the turbulence generation portion 41. As a consequence, microbubbles can be efficiently generated in the chemical solution and made finer when the chemical solution passes through the tubular portion 31 of the microbubble generator 30, with the simple configuration.

<<Size Relation between Ejection Port and Small Diameter Portion in Microbubble Generator>>

The liquid ejection apparatus 10 according to the present embodiment includes the one or more ejection ports 12 and the microbubble generator 30 constituted of the tubular portion 31 provided with the small diameter portion 33. More specifically, the liquid ejection apparatus 10 according to the present embodiment includes a plurality of ejection ports 12, and the tubular portion 31 has in its interior the first small diameter portion 38 and the second small diameter portion 42 as the small diameter portion 33. In the present embodiment, a cross-sectional area of the small diameter portion 33 is equal to or greater than the sum of the opening areas of the ejection ports 12.

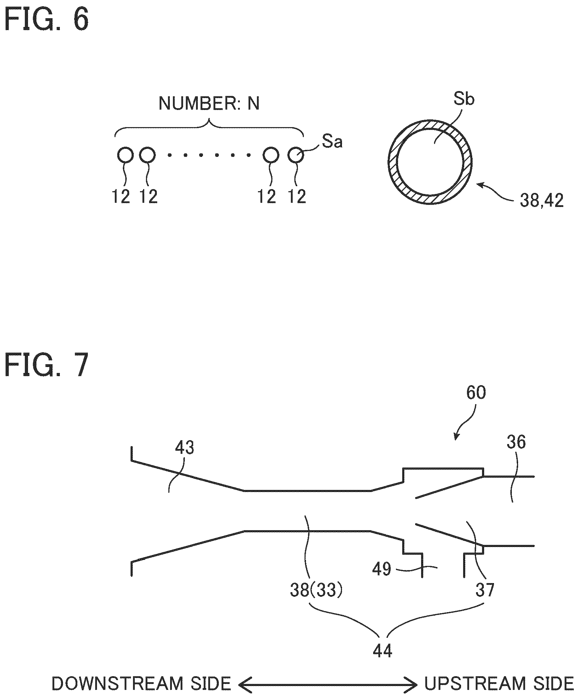

To describe this more specifically, the number of the ejection ports 12 that the liquid ejection apparatus 10 has is denoted by N (N is a natural number equal to or more than 2), the opening area of each ejection port 12 $Sa$, and the cross-sectional area of the small diameter portion 33 $Sb$, as shown in FIG. 6. In this case, Formula 1 below is satisfied in the present embodiment.

$$Sb \geq N \times Sa \quad \text{... (Formula 1)}$$

The opening area of the ejection port 12 is the area of a portion surrounded by the outer edge of the ejection port 12. In the present embodiment, every ejection port 12 has the same opening area. The cross-sectional area of the small diameter portion 33 is the area of a cross section of the small diameter portion 33 that is perpendicular to the axial direction of the tubular portion 31, in other words, the area of a portion surrounded by the edge (inner edge) of the small diameter portion 33 in cross section. It should be noted that when the first small diameter portion 38 and the second small diameter portion 42 have the same inner diameter, the cross-sectional area of each of the first small diameter portion 38 and the second small diameter portion 42 corresponds to $Sb$. When the first small diameter portion 38 and the second small diameter portion 42 have different inner diameters, the cross-sectional area of the small diameter portion 33 with a smaller inner diameter corresponds to Sb. In other words, in the case where the cross-sectional area of the small diameter portion 33 varies in the tubular portion 31 of the microbubble generator 30, it suffices if the smallest cross-sectional area of the small diameter portion 33 is equal to or greater than the sum of the opening areas of the ejection ports 12.

If Formula 1 above is satisfied, microbubbles changes to nanobubbles when the chemical solution containing microbubbles generated in the microbubble generator 30, that is, the microbubble-containing chemical solution passes the ejection ports 12. In other words, the liquid ejection apparatus 10 according to the present embodiment is configured such that the ejection ports 12 and the small diameter portion 33 satisfy Formula 1 above, whereby microbubbles generated in the microbubble generator 30 are made finer to a nanobubble size, and thus, the nanobubble-containing chemical solution is ejected (sprayed) from the ejection ports 12.

<<Effectiveness of the Present Embodiment>>

In the present embodiment, the nanobubble-containing chemical solution can be ejected with a relatively simple configuration. More specifically, in the present embodiment, cavitation and turbulence are created in the microbubble generator 30 to generate microbubbles in the chemical solution passing through the microbubble generator 30. In this process, since microbubbles are generated using dissolved air in the chemical solution, it is not necessary to separately inject pressurized gas into the chemical solution in the microbubble generator 30, so that a device for injecting pressurized gas or the like is not required.

Further, in the present embodiment, the ejection ports 12 and the small diameter portion 33 in the microbubble generator 30 satisfy Formula 1 above. Owing to this configuration, microbubbles are made finer and change to nanobubbles when the microbubble-containing chemical solution passes the ejection ports 12, and as a consequence, the nanobubble-containing chemical solution is ejected from the ejection ports 12. As described above, in the present embodiment, a cross-sectional area of the small diameter portion 33 of the microbubble generator 30 is equal to or greater than the sum of the opening areas of the ejection ports 12, whereby nanobubbles can be generated in the chemical solution. When the microbubble generator 30 as above is incorporated into an existing speed sprayer for instance, by taking advantage of the foregoing characteristics, the nanobubble-containing chemical solution can be ejected with a relatively simple configuration.

Further, in the present embodiment, the channel 15 branches off on the downstream side of the microbubble generator 30 as shown in FIG. 2, so that a part of the microbubble-containing chemical solution flows from the first channel 17 to the second channel 18 and is returned to the liquid tank 13. In other words, in the present embodiment, the microbubble-containing chemical solution circulates via the liquid tank 13, the pump 14, and the microbubble generator 30. This configuration can sufficiently increase the number of microbubbles contained in the chemical solution flowing through the first channel 17. Furthermore, a part of the microbubble-containing chemical solution is returned to the liquid tank 13, and this ensures a longer channel (that is, channel 15) through which the chemical solution flows, so that a solid substance such as a fertilizer or a medical agent is easily dissolved in water. Besides, since a solid substance is easily dissolved in water, the solid substance is dissolved well, and this can prevent a part of the solid substance remaining as a solid in the liquid tank 13 from forming bubbles and bubbling at the liquid surface in the tank.

<<Other Embodiments>>

The liquid ejection apparatus of the present invention and a mobile object on which the liquid ejection apparatus is mounted are described above by use of one specific embodiment; however, the foregoing embodiment is merely an example, and other examples are also applicable.

While the description is made taking as an example the liquid ejection apparatus 10 having the plurality of ejection ports 12 in the foregoing embodiment, the liquid ejection apparatus may have a single ejection port only. In this case, the opening area of the single ejection port 12 corresponds to the sum of the opening areas of the one or more ejection ports, and it suffices if the cross-sectional area of the small diameter portion 33 in the tubular portion 31 of the microbubble generator 30 is greater than the opening area of the single ejection port 12.

While the nozzle configured as shown in FIGS. 3 to 5 is used as an example of the microbubble generator 30 in the foregoing embodiment, the invention is not limited thereto, and an ejector shown in FIG. 7 may be used as a microbubble generator 60.

The ejector constituting the microbubble generator 60 does not have the increased diameter portion 39, the uniform diameter portion 40, the turbulence generation portion 41, and the second small diameter portion 42 but has in its interior a gas injection portion 49 that communicates with the large diameter portion 36. Except for that, the ejector has substantially the same configuration as the nozzle constituting the microbubble generator 30 described above. When the chemical solution passes through the inside of the ejector as above, negative pressure is generated in a flow of the chemical solution, and this causes cavitation, whereby microbubbles can be generated in the chemical solution. However, the configuration of the above-described microbubble generator 30 of nozzle type can more efficiently generate microbubbles in the chemical solution and make the microbubbles finer.

While the description is made taking as an example the case where a part of the first channel 17 is constituted of the hose H in the foregoing embodiment, the first channel 17 may be entirely constituted of a pipe or the hose H.

In the foregoing embodiment, the channel 15 of circulation type is constructed, so that a part of the chemical solution having passed the microbubble generator 30, that is, a part of the microbubble-containing chemical solution is returned to the liquid tank 13. However, the invention is not limited thereto; the channel 15 for the chemical solution may be a channel of non-circulation type, and the chemical solution having passed the microbubble generator 30 (that is, the microbubble-containing chemical solution) may not be returned to the liquid tank 13 but may be entirely ejected from the ejection ports 12.

While the description is made on the liquid ejection apparatus mounted on a vehicle (e.g., a speed sprayer or a boom sprayer) in the foregoing embodiment, the invention is not limited thereto. The liquid ejection apparatus of the present invention may be a portable apparatus that a user can carry or a stationary apparatus. The portable apparatus may be of a shoulder-held type or a backpack type.

In the foregoing embodiment, drive devices in the liquid ejection apparatus are operated by driving force transmitted from an engine that the vehicle 100 with a liquid ejection apparatus has. However, the invention is not limited thereto; drive devices of the liquid ejection apparatus 10 may be operated by power from a rechargeable battery (battery) mounted on the vehicle or power supplied from a power source such as a commercial power source or a solar panel. Drive devices equipped in the liquid ejection apparatus 10 may be manual devices.

The liquid ejection apparatus of the present invention may be formed by incorporating the microbubble generator 30 to an existing apparatus (e.g., a speed sprayer or a boom sprayer) as described in the foregoing embodiment. Alternatively, the liquid ejection apparatus of the present invention may be newly manufactured by assembling its constituent components from scratch.

While the chemical solution, i.e., water having a fertilizer or a medical agent dissolved therein is used as an example of a liquid in the foregoing embodiment, the invention is not limited thereto. The liquid ejection apparatus of the present invention is applicable also in cases of ejecting other liquids than the chemical solution, for instance, general water that is not in the form of chemical solution, oils, alcohols, organic solvents, and dispersion solutions such as emulsions. Water is not limited to water for an agricultural or horticultural purpose and may be, for instance, water for production of chemicals, water for production of foods, water for production of cosmetics, water for production of functional materials, water used in the fishing industry (particularly, fish farming industry), washing water, or water for medical use. The invention is applicable also in the case where nanobubbles are generated in such water and ejected.

REFERENCE SIGNS LIST

| | |
|---|---|
| 10 | liquid ejection apparatus |
| 11 | ejection head |
| 12 | ejection port |
| 13 | liquid tank |
| 13a | supply port |
| 13b | discharge port |
| 13c | return port |
| 14 | pump |
| 14a | discharge port |
| 14b | second discharge port |
| 15 | channel |
| 16 | intake channel |
| 17 | first channel |
| 18 | second channel |
| 30 | microbubble generator |
| 31 | tubular portion |
| 32 | screw thread |
| 33 | small diameter portion |
| 34 | inflow port |
| 35 | outflow port |
| 36 | large diameter part |
| 37 | reduced diameter portion |
| 38 | first small diameter portion |
| 39 | increased diameter portion |
| 40 | uniform diameter portion |
| 41 | turbulence generation portion |
| 42 | second small diameter portion |
| 43 | ejection portion |
| 44 | load generation portion |
| 45 | step surface |
| 46 | tubular protrusion portion |
| 47 | communication portion |
| 48 | recess portion |
| 49 | gas injection portion |
| 51 | first member |
| 52 | second member |
| 53, 54 | flange portion |
| 60 | microbubble generator |
| 100 | vehicle with a liquid ejection apparatus |
| 110 | blower device |
| H | hose |
| V | on-off valve |

**Claims**

1. A liquid ejection apparatus comprising:

one or more ejection ports ejecting liquid;
a discharge device discharging liquid;
a first channel through which liquid discharged from the discharge device flows toward the one or more ejection ports; and
a microbubble generator disposed at an intermediate position of the first channel,

wherein a small diameter portion is provided in a tubular portion of the microbubble generator, and an inner diameter of the small diameter portion is smaller than that of a portion situated on an upstream side of the small diameter portion,

the microbubble generator generates microbubbles in liquid flowing through the tubular portion by use of cavitation occurring when the liquid passes through the small diameter portion from an upstream side of the small diameter portion, and

a cross-sectional area of the small diameter portion is equal to or greater than a sum of opening areas of the one or more ejection ports.

2. The liquid ejection apparatus according to claim 1 comprising a storage storing liquid,

wherein the discharge device takes in liquid stored in the storage and discharges the liquid, the liquid ejection apparatus further comprises a second channel connected to the first channel at a position on a downstream side of the microbubble generator in the first channel, and

a downstream end of the second channel is connected to the storage.

3. The liquid ejection apparatus according to claim 1,

wherein the small diameter portion includes a first small diameter portion and a second small diameter portion situated on a downstream side of the first small diameter portion, and the tubular portion is provided in its interior with, between the first small diameter portion and the second small diameter portion,

an increased diameter portion situated on a downstream side of the first small diameter portion and having an inner diameter increasing toward a downstream side,

a uniform diameter portion situated on a downstream side of the increased diameter portion to be adjacent to the increased diameter portion and extending toward a downstream side with its inner diameter being same as an inner diameter of a downstream end of the increased diameter portion, and

a turbulence generation portion disposed between the uniform diameter portion and the second small diameter portion to be adjacent to each of the uniform diameter portion and the second small diameter portion and extending toward a downstream side with its inner diameter being same as the inner diameter of the uniform diameter portion.

4. The liquid ejection apparatus according to claim 3, wherein, in an axial direction of the tubular portion, a step surface intersecting the axial direction is provided between an inner wall surface of the turbulence generation portion and an inner wall surface of the second small diameter portion.

5. The liquid ejection apparatus according to claim 4,

wherein the turbulence generation portion is provided in its interior with a tubular protrusion portion protruding from, of the step surface, a portion surrounding an upstream end of the second small diameter portion toward an upstream side along the axial direction, and a recess portion is provided between the inner wall surface of the turbulence generation portion and an outer peripheral surface of the tubular protrusion portion.

6. The liquid ejection apparatus according to claim 1, wherein a discharge pressure when the discharge device discharges liquid is set such that a pressure of liquid when the liquid passes an upstream end of the microbubble generator in the first channel is not less than 0.15 MPa.

7. The liquid ejection apparatus according to claim 1, wherein the microbubble generator is constituted of a nozzle from whose tip microbubble-containing liquid flows out.

8. The liquid ejection apparatus according to claim 1,

wherein a part of the first channel is constituted of a hose, and a part of the hose is joined to an end of the tubular portion of the microbubble generator.

# FIG. 1

# FIG. 2

FIG. 3

FIG. 4

DOWNSTREAM SIDE $\longleftrightarrow$ UPSTREAM SIDE
AXIAL DIRECTION

FIG. 5

## FIG. 6

NUMBER: N

Sa

Sb

12  12                    12  12

38,42

## FIG. 7

60

43                                              36

49

38(33)                              37

44

DOWNSTREAM SIDE ⟷ UPSTREAM SIDE

## INTERNATIONAL SEARCH REPORT

| | International application No. |
|---|---|
| | **PCT/JP2023/035935** |

| A. | CLASSIFICATION OF SUBJECT MATTER |
|---|---|

*B05B 17/00*(2006.01)i; *B01F 23/2373*(2022.01)i; *B01F 25/00*(2022.01)i; *B05B 1/34*(2006.01)i
FI:    B05B17/00 102; B01F23/2373; B01F25/00; B05B1/34 101

According to International Patent Classification (IPC) or to both national classification and IPC

| B. | FIELDS SEARCHED |
|---|---|

Minimum documentation searched (classification system followed by classification symbols)

B05B1/00-3/18,7/00-9/08,17/00-17/08; B01F21/00-25/90; A01M1/00-99/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2011-121002 A (TAKENAKA KOMUTEN CO., LTD.) 23 June 2011 (2011-06-23) <br> claims, paragraphs [0038]-[0069], fig. 1-10 | 1-8 |
| A | JP 2021-185861 A (MARUYAMA MFG. CO., LTD.) 13 December 2021 (2021-12-13) <br> claim 1, paragraphs [0012]-[0035], fig. 1-4 | 1-8 |
| A | JP 2018-15715 A (KAKUICHI CO., LTD.) 01 February 2018 (2018-02-01) <br> claim 1, paragraphs [0011]-[0025], fig. 1-3 | 1-8 |
| A | JP 2022-63993 A (FUJI KEIKI KK) 25 April 2022 (2022-04-25) <br> paragraphs [0001], [0002], [0023]-[0061], fig. 1-3 | 1-8 |
| A | JP 2008-246486 A (WATABE, Sadatoshi) 16 October 2008 (2008-10-16) <br> whole document | 1-8 |
| A | JP 2011-240268 A (MAINDOREI GIJUTSU KAGAKU KENKYUSHO KK) 01 December 2011 (2011-12-01) <br> whole document | 1-8 |

✓ Further documents are listed in the continuation of Box C.       ✓ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **22 December 2023** | **09 January 2024** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

## INTERNATIONAL SEARCH REPORT

International application No.

**PCT/JP2023/035935**

### C. DOCUMENTS CONSIDERED TO BE RELEVANT

| Category* | Citation of document, with indication, where appropriate, of the relevant passages | Relevant to claim No. |
|---|---|---|
| A | JP 2018-69213 A (KOYO CO., LTD.) 10 May 2018 (2018-05-10) whole document | 1-8 |
| A | JP 2021-20153 A (SHIBATA KK) 18 February 2021 (2021-02-18) whole document | 1-8 |

Form PCT/ISA/210 (second sheet) (January 2015)

# EP 4 609 958 A1

**INTERNATIONAL SEARCH REPORT**
Information on patent family members

International application No.

**PCT/JP2023/035935**

| Patent document cited in search report | | | Publication date (day/month/year) | Patent family member(s) | | | Publication date (day/month/year) |
|---|---|---|---|---|---|---|---|
| JP | 2011-121002 | A | 23 June 2011 | (Family: none) | | | |
| JP | 2021-185861 | A | 13 December 2021 | (Family: none) | | | |
| JP | 2018-15715 | A | 01 February 2018 | US 2019/0134574 A1 claim 1, paragraphs [0013]-[0025], fig. 1-3 WO 2018/020701 A1 EP 3482820 A1 CN 109475828 A | | | |
| JP | 2022-63993 | A | 25 April 2022 | (Family: none) | | | |
| JP | 2008-246486 | A | 16 October 2008 | US 2009/0273103 A1 whole document WO 2007/034580 A1 | | | |
| JP | 2011-240268 | A | 01 December 2011 | (Family: none) | | | |
| JP | 2018-69213 | A | 10 May 2018 | (Family: none) | | | |
| JP | 2021-20153 | A | 18 February 2021 | US 2022/0242754 A1 whole document WO 2021/020310 A1 EP 4005654 A1 KR 10-2021-0148314 A CN 113853357 A | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011152513 A
- JP 2015097509 A